# EUROPÄISCHE PATENTANMELDUNG

(11) **EP 4 089 825 A1**
(43) Veröffentlichungstag der Anmeldung: **16.11.2022**
(21) Anmeldenummer: 22172842.1
(22) Anmeldetag: 11.05.2022
(51) Int. Cl.: H01M 50/502, H01M 50/503, H01M 50/505, H01M 50/20, H01M 50/238, H01M 50/242, H01M 50/249, H01M 50/584

(54) **ZELLVERBINDER FÜR EINEN ELEKTRISCHEN ENERGIESPEICHER UND ELEKTRISCHER ENERGIESPEICHER MIT DEM ZELLVERBINDER**

(30) Priorität: 11.05.2021 DE 102021112321
(71) Anmelder: Yazaki Systems Technologies GmbH, 93059 Regensburg (DE)
(72) Erfinder: BÖHM, Markus, 90482 Nürnberg (DE); JUNGTÄUBL, Daniel, 93049 Regensburg (DE)
(74) Vertreter: Patentanwaltskanzlei WILHELM & BECK

(57) **Zusammenfassung**

Die Erfindung betrifft einen Zellverbinder (15) und einen elektrischen Energiespeicher (10) für ein Fahrzeug, insbesondere ein Kraftfahrzeug, wobei der Zellverbinder (15) zum elektrisch leitfähigen Verbinden eines ersten Zellterminals (30) einer ersten elektrischen Energiespeicherzelle (20) des elektrischen Energiespeichers (10) und eines zweiten Zellterminals (35) einer zweiten elektrischen Energiespeicherzelle (25) des elektrischen Energiespeichers (10) ausgebildet ist, wobei der Zellverbinder (15) einen ersten Kontaktbereich (45) zum Verbinden mit dem ersten Zellterminal (30), einen zweiten Kontaktbereich (50) zum Verbinden mit dem zweiten Zellterminal (35) und einen zwischen dem ersten Kontaktbereich (45) und dem zweiten Kontaktbereich (50) angeordneten Kompensationsbereich (55) aufweist, wobei der Kompensationsbereich (55) den ersten Kontaktbereich (45) mit dem zweiten Kontaktbereich (50) verbindet und ausgebildet ist, eine Bewegung des ersten Kontaktbereichs (45) relativ zu dem zweiten Kontaktbereich (50) zu ermöglichen, wobei der Kompensationsbereich (55) wenigstens ein erstes Federelement (115) aufweist, wobei das erste Federelement (115) zumindest abschnittsweise mäanderförmig ausgeformt ist und sich im Wesentlichen vollständig plattenförmig in einer ersten Ebene (59) erstreckt, wobei das erste Federelement (115) ausgebildet ist, bei einer Bewegung des ersten Kontaktbereichs (45) relativ zu dem zweiten Kontaktbereich (50) in der ersten Ebene (59) zu federn.

## Beschreibung

Die Erfindung betrifft einen Zellverbinder gemäß Patentanspruch 1 und einen elektrischen Energiespeicher für ein Fahrzeug, insbesondere ein Kraftfahrzeug, gemäß Patentanspruch 14.

Aus der DE 10 2012 100 862 A1 ist ein Zellverbinder zum elektrischen Verbinden eines ersten Zellterminals einer ersten elektrochemischen Zelle und eines zweiten Zellterminals einer zweiten elektrochemischen Zelle einer elektrochemischen Vorrichtung bekannt. Der Zellverbinder weist einen ersten Kontaktbereich zum Verbinden mit dem ersten Zellterminal und einen zweiten Kontaktbereich zum Verbinden mit dem zweiten Zellterminal auf. Ferner weist der Zellverbinder einen Grundkörper aus mehreren übereinander angeordneten Materiallagen auf, welche mehrlagig übereinander angeordnet sind. Des Weiteren weist der Zellverbinder einen verformbaren Kompensationsbereich auf, der den ersten Kontaktbereich und den zweiten Kontaktbereich verbindet und eine Bewegung der Kontaktbereiche relativ zueinander ermöglicht. Der Kompensationsbereich ist ebenso mehrlagig ausgebildet. Dabei ist der Kompensationsbereich nach oben hin und nach unten hin ausgebeult.

Es ist Aufgabe der Erfindung, einen verbesserten Zellverbinder und einen verbesserten elektrischen Energiespeicher mit solch einem Zellverbinder bereitzustellen.

Diese Aufgabe wird mittels eines Zellverbinders gemäß Patentanspruch 1 und eines elektrischen Energiespeichers gemäß Patentanspruch 14 gelöst. Vorteilhafte Ausführungsformen sind in den abhängigen Ansprüchen angegeben.

Es wurde erkannt, dass ein verbesserter Zellverbinder zum elektrisch leitfähigen Verbinden eines ersten Zellterminals einer ersten elektrischen Energiespeicherzelle eines elektrischen Energiespeichers und eines zweiten Zellterminals einer zweiten elektrischen Energiespeicherzelle des elektrischen Energiespeichers dadurch bereitgestellt werden kann, dass der Zellverbinder einen ersten Kontaktbereich zum Verbinden mit dem ersten Zellterminal, einen zweiten Kontaktbereich zum Verbinden mit dem zweiten Zellterminal und einen zwischen dem ersten Kontaktbereich und dem zweiten Kontaktbereich angeordneten Kompensationsbereich aufweist. Der Kompensationsbereich verbindet den ersten Kontaktbereich mit dem zweiten Kontaktbereich und ist ausgebildet, eine Bewegung des ersten Kontaktbereichs relativ zu dem zweiten Kontaktbereich zu ermöglichen. Der Kompensationsbereich weist wenigstens ein erstes Federelement auf, wobei das erste Federelement zumindest abschnittsweise mäanderförmig ausgeformt ist und sich plattenförmig in einer ersten Ebene erstreckt. Das erste Federelement ist ausgebildet, bei einer Bewegung des ersten Kontaktbereichs relativ zu dem zweiten Kontaktbereich in der ersten Ebene zu federn.

Diese Ausgestaltung hat den Vorteil, insbesondere wenn sich das erste Federelement ausschließlich nur in der ersten Ebene erstreckt, dass der Zellverbinder besonders flach ausgebildet ist. Insbesondere kann dadurch auf eine Auswölbung des ersten Federelements, beispielsweise über den ersten Kontaktbereich und/oder den zweiten Kontaktbereich verzichtet werden. Dadurch ist der benötigte Bauraumbedarf zur Installation des Zellverbinders besonders gering. Ferner kann eine hohe Stromtragfähigkeit des ersten Federelements sichergestellt werden. Des Weiteren kann der Zellverbinder mittels eines Stanzverfahrens besonders einfach und kostengünstig aus einem einlagigen Blechmaterial, beispielsweise aus einem Aluminiumblech, gefertigt werden. Der Zellverbinder kann dabei Teil einer Sammelschiene, die auch als Busbar bezeichnet werden kann, sein. Durch die mäanderförmige Ausgestaltung des ersten Federelements wird eine hohe Lebensdauer des Zellverbinders und bei gleichzeitiger hoher Stromtragfähigkeit über die Lebensdauer sichergestellt. Insbesondere wird eine Rissbildung an dem ersten Federelement vermieden. Dabei wird unter mäanderförmig eine geschwungene, bereichsweise bogenförmig und/oder in Windungen und nicht kreuzende Kontur verstanden, die dafür sorgt, dass eine Federseitenfläche des Federelements stetig und vorzugsweise ohne Kanten ausgebildet ist.

In einer weiteren Ausführungsform weist der Kompensationsbereich ein zweites Federelement auf, wobei das zweite Federelement in einer ersten Richtung versetzt zu dem ersten Federelement angeordnet ist. Das zweite Federelement ist zumindest abschnittsweise mäanderförmig und vorzugsweise plattenförmig ausgeformt und erstreckt sich in der ersten Ebene, vorzugsweise im Wesentlichen vollständig. Diese Ausgestaltung hat den Vorteil, dass die Stromtragfähigkeit zur elektrischen Verbindung des ersten Kontaktbereichs mit dem zweiten Kontaktbereich durch das zweite Federelement weiter erhöht werden kann und dadurch besonders hohe elektrische Ströme zwischen dem ersten Kontaktbereich und dem zweiten Kontaktbereich übertragen werden können. Dadurch eignet sich der Zellverbinder insbesondere bei der Herstellung einer Traktionsbatterie.

In einer weiteren Ausführungsform weist das erste Federelement wenigstens einen ersten Teilabschnitt und einen zweiten Teilabschnitt auf, wobei der erste Teilabschnitt an einer Seite mit dem ersten Kontaktbereich verbunden ist. Der erste Teilabschnitt erstreckt sich geradlinig in einer zweiten Richtung zu dem zweiten Kontaktbereich hin. Der zweite Teilabschnitt schließt sich auf einer dem ersten Kontaktbereich abgewandten Seite des ersten Teilabschnitts an den ersten Teilabschnitt an. Der zweite Teilabschnitt ist S-förmig ausgebildet. Diese Ausgestaltung hat den Vorteil, dass insbesondere mittels des S-förmig ausgebildeten zweiten Teilabschnitts sowohl eine Bewegung der Teilabschnitte zueinander in der ersten Richtung als auch in der zweiten Richtung ausgeglichen werden kann. Insbesondere gibt hierbei der zweite Teilabschnitt nach und wird aufgeweitet oder elastisch gestaucht, ohne dass dabei der zweite Teilabschnitt materialtechnisch mechanisch beschädigt wird.

In einer weiteren Ausführungsform weist das erste Federelement einen dritten Teilabschnitt auf, wobei der zweite Teilabschnitt auf einer dem ersten Teilabschnitt abgewandten Seite mit dem dritten Teilabschnitt verbunden ist. Der dritte Teilabschnitt erstreckt sich geradlinig in der zweiten Richtung. Der dritte Teilabschnitt ist in der ersten Richtung versetzt zu dem ersten Teilabschnitt angeordnet und mit dem zweiten Kontaktbereich verbunden. Diese Ausgestaltung hat den Vorteil, dass hinreichend Federweg für den zweiten Teilabschnitt zum Federn und Kompensieren der Bewegung des ersten Kontaktbereichs relativ zum zweiten Kontaktbereich bereitgestellt werden kann.

In einer weiteren Ausführungsform ist das zweite Federelement gegenläufig zu dem ersten Federelement verlaufend ausgeformt. Diese Ausgestaltung hat den Vorteil, dass der Kompensationsbereich in der ersten Richtung besonders schlank gehalten werden kann. Auch kann das zweite Federelement identisch zu dem ersten Federelement ausgeformt verlaufend sein.

In einer weiteren Ausführungsform weist der erste Kontaktbereich eine erste Seitenfläche und eine in der ersten Richtung gegenüberliegend zu der ersten Seitenfläche angeordnete zweite Seitenfläche auf. Der erste Kontaktbereich weist zwischen der ersten Seitenfläche und der zweiten Seitenfläche eine erste maximale Quererstreckung auf. Eine erste maximale Breite des ersten Federelements ist geringer als die erste maximale Quererstreckung. Dadurch ist das erste Federelement besonders elastisch und kann dadurch besonders gut und weich die Bewegung zwischen dem ersten Kontaktbereich und dem zweiten Kontaktbereich kompensieren.

In einer weiteren Ausführungsform schließt sich in der ersten Richtung das erste Federelement an die erste Seitenfläche des ersten Kontaktbereichs an. Diese Ausgestaltung hat den Vorteil, dass besonders viel Bewegungsraum zum Einfedern, insbesondere des zweiten Teilabschnitts, zur Verfügung steht.

In einer weiteren Ausführungsform weist der zweite Kontaktbereich eine dritte Seitenfläche und eine in der ersten Richtung gegenüberliegend zu der dritten Seitenfläche angeordnete vierte Seitenfläche auf, wobei die dritte Seitenfläche auf einer der ersten Seitenfläche zugewandten Seite und die vierte Seitenfläche auf einer der zweiten Seitenfläche zugewandten Seite des zweiten Kontaktbereichs angeordnet ist. Das erste Federelement ist mit dem zweiten Kontaktbereich beabstandet zu der dritten Seitenfläche und zu der vierten Seitenfläche verbunden. Dadurch kann die mäanderförmige Ausgestaltung des ersten Federelements besonders gut zwischen dem ersten Kontaktbereich und dem zweiten Kontaktbereich untergebracht werden.

In einer weiteren Ausführungsform ist das zweite Federelement mit dem ersten Kontaktbereich anschließend an die zweite Seitenfläche verbunden. Das zweite Federelement ist mit dem zweiten Kontaktbereich beabstandet zu der dritten Seitenfläche und der vierten Seitenfläche verbunden.

In einer weiteren Ausführungsform ist in dem ersten Federelement eine Durchgangsöffnung angeordnet, wobei die Durchgangsöffnung einem Verlauf einer Außenkontur des ersten Federelements folgt. Dadurch ist das erste Federelement besonders weich.

In einer weiteren Ausführungsform weist der Kompensationsbereich wenigstens einen länglich geradlinig verlaufenden ausgebildeten ersten Schlitz auf, wobei der erste Schlitz zwischen dem ersten Federelement und dem ersten Kontaktbereich angeordnet ist. Dadurch ist der Kompensationsbereich besonders mechanisch steif und weist eine hohe Stromtragfähigkeit auf.

In einer weiteren Ausführungsform sind der erste Kontaktbereich und der zweite Kontaktbereich plattenförmig ausgebildet und erstecken sich in der ersten Ebene. Dadurch ist der Bauraumbedarf für den Zellverbinder besonders gering

In einer weiteren Ausführungsform weist das erste Federelement eine erste Federseitenfläche auf. Die erste Federseitenfläche ist, vorzugsweise über ihre gesamte Erstreckung, stetig verlaufend ausgebildet. Alternativ oder zusätzlich ist die erste Federseitenfläche, vorzugsweise über ihre gesamte Erstreckung, kantenfrei ausgebildet. Dadurch wird eine Rissbildung im Federelement von außen nach innen hin, beispielsweise ausgehend von einer Kante, vermieden.

Ferner kann ein besonders einfacher und bauraumgünstiger elektrischer Energiespeicher, insbesondere ein Traktionsbatterie, für ein Fahrzeug, insbesondere ein Kraftfahrzeug, dadurch bereitgestellt werden, dass der elektrische Energiespeicher einen Zellverbinder, eine erste elektrische Energiespeicherzelle und eine zweite elektrische Energiespeicherzelle aufweist. Der Zellverbinder ist wie oben beschrieben ausgebildet. Die erste elektrische Energiespeicherzelle weist ein erstes Zellterminal und die zweite elektrische Energiespeicherzelle weist ein zweites Zellterminal auf, wobei der erste Kontaktbereich mit dem ersten Zellterminal und der zweite Kontaktbereich mit dem zweiten Zellterminal elektrisch und mechanisch verbunden sind.

Nachfolgend wird die Erfindung anhand von Figuren näher erläutert. Dabei zeigen:
- Fig. 1: eine schematische Seitenansicht eines elektrischen Energiespeichers mit einem Zellverbinder gemäß einer ersten Ausführungsform;
- Fig. 2: eine perspektivische Darstellung des in Fig. 1 gezeigten Zellverbinders;
- Fig. 3: eine Draufsicht auf den in den Figuren 1 und 2 gezeigten Zellverbinder gemäß einer ersten Ausführungsform;
- Fig. 4: die in Fig. 1 gezeigte Seitenansicht auf den elektrischen Energiespeicher;
- Fig. 5: eine perspektivische Darstellung eines Zellverbinders gemäß einer zweiten Ausführungsform; und
- Fig. 6: eine perspektivische Darstellung eines Zellverbinders gemäß einer dritten Ausführungsform.

In den nachfolgenden Figuren wird auf ein Koordinatensystem Bezug genommen. Das Koordinatensystem weist eine x-Achse (Längsrichtung), eine y-Achse (Querrichtung) und eine z-Achse (Höhenrichtung) auf. Das Koordinatensystem ist beispielhaft als Rechtssystem ausgebildet.

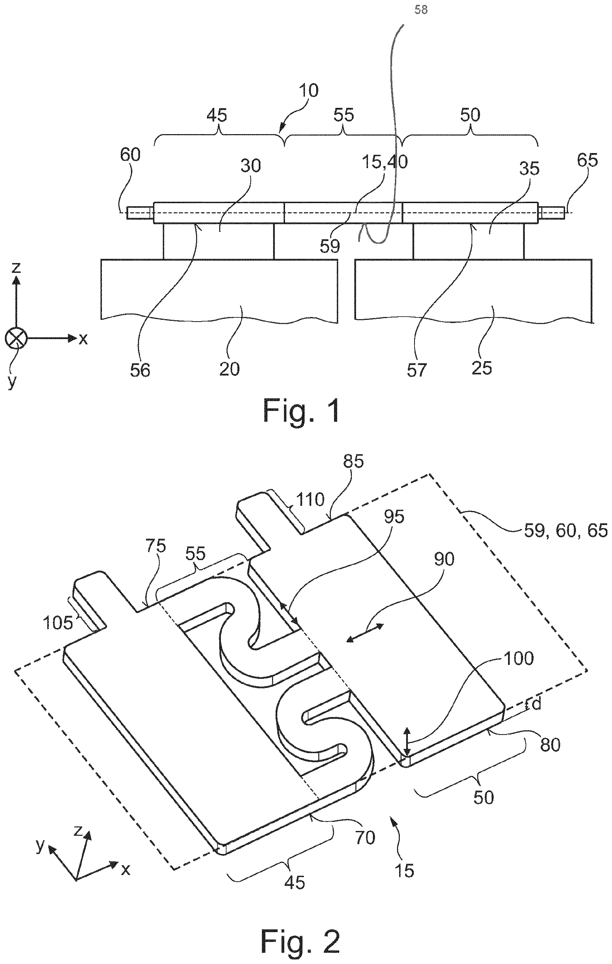

Fig. 1 zeigt eine schematische Seitenansicht eines elektrischen Energiespeichers 10.

Der elektrische Energiespeicher 10 ist beispielsweise als Traktionsbatterie eines Fahrzeugs, insbesondere eines Kraftfahrzeugs, ausgebildet. Der elektrische Energiespeicher 10 weist beispielsweise einen Zellverbinder 15 gemäß einer ersten Ausführungsform, eine erste elektrische Energiespeicherzelle 20 und wenigstens eine zweite elektrische Energiespeicherzelle 25 auf. Die erste elektrische Energiespeicherzelle 20 weist beispielsweise ein erstes Zellterminal 30 und die zweite elektrische Energiespeicherzelle 25 weist beispielsweise ein zweites Zellterminal 35 auf. Die erste elektrische Energiespeicherzelle 20 ist beispielsweise nächstliegend zu der zweiten elektrischen Energiespeicherzelle 25 beabstandet angeordnet. Die erste elektrische Energiespeicherzelle 20 kann aber auch direkt an der zweiten Energiespeicherzelle 25 anliegen. Auch kann zwischen der ersten elektrischen Energiespeicherzelle 20 und der zweiten elektrischen Energiespeicherzelle 25 ein Kühlkörper einer Kühleinrichtung des elektrischen Energiespeichers 10 angeordnet sein.

Das erste Zellterminal 30 und das zweite Zellterminal 35 sind ausgebildet, eine elektrische Leistung, bereitgestellt von der jeweiligen elektrischen Energiespeicherzelle 20, 25, zu übertragen. Der Zellverbinder 15 verbindet im Beispiel das erste Zellterminal 30 mit dem zweiten Zellterminal 35 elektrisch und beispielsweise zusätzlich mechanisch. Ein über den Zellverbinder 15 übertragbarer elektrischer Strom kann 300 bis 1000 Ampere betragen. Der Zellverbinder 15 kann Teil einer Sammelschiene 40, die auch als Busbar bezeichnet werden kann, sein.

Der Zellverbinder 15 weist beispielhaft einen ersten Kontaktbereich 45, einen zweiten Kontaktbereich 50 und einen Kompensationsbereich 55 auf. Der erste Kontaktbereich 45 ist in Fig. 1 beispielsweise oberseitig des ersten Zellterminals 30 angeordnet und an einer ersten Unterseite 56 mit dem ersten Zellterminal 30 mechanisch und elektrisch verbunden, beispielsweise verschweißt.

Der zweite Kontaktbereich 50 ist beispielhaft oberseitig auf dem zweiten Zellterminal 35 angeordnet und an einer zweiten Unterseite 57 des zweiten Kontaktbereichs 50 mechanisch und elektrisch mit dem zweiten Zellterminal 35 verbunden. Der Kompensationsbereich 55 ist zwischen dem ersten Kontaktbereich 45 und dem zweiten Kontaktbereich 50 angeordnet und verbindet sowohl mechanisch als auch elektrisch den ersten Kontaktbereich 45 mit dem zweiten Kontaktbereich 50.

Der Kompensationsbereich 55 ist plattenförmig ausgebildet und ist in Längsrichtung zwischen dem ersten Kontaktbereich 45 und dem zweiten Kontaktbereich 50 angeordnet. Der Kompensationsbereich 55 weist in z-Richtung im Wesentlichen eine identische Höhe/Dicke auf und erstreckt sich in einer ersten Ebene 59, die als xy-Ebene in der Ausführungsform ausgebildet ist.

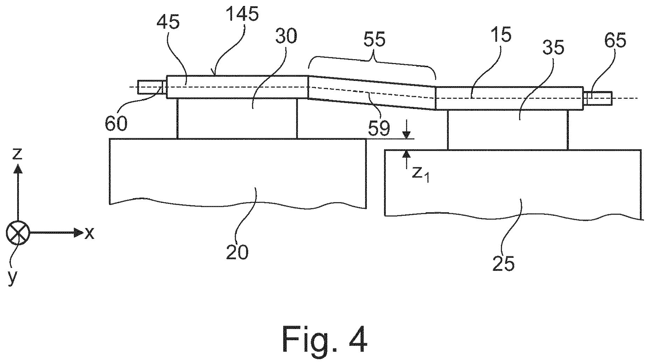

In der Ausführungsform sind ferner beispielsweise der erste Kontaktbereich 45 und der zweite Kontaktbereich 50 plattenförmig ausgebildet. Dabei erstreckt sich der erste Kontaktbereich 45 in einer zweiten Ebene 60. Der zweite Kontaktbereich 50 erstreckt sich beispielsweise in einer dritten Ebene 65. Die zweite Ebene 60 ist als xy-Ebene ebenso wie die dritte Ebene 65 ausgebildet. In Fig. 1 sind beispielsweise die erste Ebene 59, die zweite Ebene 60 und die dritte Ebene 65 identisch, sodass sich auch der erste Kontaktbereich 45 und der zweite Kontaktbereich 50 ebenso in der ersten Ebene 59 erstrecken. Selbstverständlich kann die zweite Ebene 60 gegenüber der dritten Ebene 65 verkippt sein oder beispielsweise einen Höhenversatz aufweisen (vgl. Fig. 4).

Fig. 2 zeigt eine perspektivische Darstellung des in Fig. 1 gezeigten Zellverbinders 15.

Der Zellverbinder 15 kann aus einem plattenförmigen Blechmaterial beispielsweise mittels eines Stanzverfahrens oder eines Laserschweißverfahrens ausgeschnitten werden. Der erste Kontaktbereich 45 weist in einer Draufsicht beispielsweise im Wesentlichen eine rechteckförmige Ausgestaltung auf. Ebenso ist der zweite Kontaktbereich 50 beispielsweise rechteckförmig in der Draufsicht ausgebildet. Der erste Kontaktbereich 45 weist eine erste Seitenfläche 70 und eine in einer ersten Richtung, die einer y-Richtung entspricht, gegenüberliegend angeordnete zweite Seitenfläche 75 auf. Die erste Seitenfläche 70 und die zweite Seitenfläche 75 sind beispielhaft jeweils in einer xz-Ebene angeordnet und verlaufen parallel zueinander.

Der zweite Kontaktbereich 50 weist eine dritte Seitenfläche 80 und eine vierte Seitenfläche 85 auf, wobei beispielhaft die dritte Seitenfläche 80 und die erste Seitenfläche 70 in einer gemeinsamen xz-Ebene angeordnet sind. Durch die identische Quererstreckung des zweiten Kontaktbereichs 50 in der ersten Richtung (Querrichtung) ist auch die vierte Seitenfläche 85 in einer gemeinsamen weiteren xz-Ebene mit der zweiten Seitenfläche 75 angeordnet. In Längsrichtung (x-Richtung) kann eine Erstreckung des ersten Kontaktbereichs 45 identisch zu einer Erstreckung des zweiten Kontaktbereichs 50 sein.

Zusätzlich kann der Zellverbinder 15 einen ersten Steg 105 und einen zweiten Steg 110 aufweisen. Der erste Steg 105 ist in Längsrichtung schmaler als der erste Kontaktbereich 45 ausgebildet und ist an der zweiten Seitenfläche 75 befestigt. Der erste Steg 105 ragt beispielsweise von der zweiten Seitenfläche 75 in Querrichtung von dem ersten Kontaktbereich 45 weg. Dabei verläuft der erste Steg 105 im Wesentlichen parallel zu der y-Achse. Der zweite Steg 110 ist an der vierten Seitenfläche 85 angeordnet. Der zweite Steg 110 ist in Längsrichtung schmaler ausgebildet als der zweite Kontaktbereich 50. In der Ausführungsform ist die Erstreckung in Querrichtung des ersten Stegs 105 und des zweiten Stegs 110 beispielhaft identisch. Dabei kann der erste Steg 105 und/oder der zweite Steg 110 jeweils in mittiger Lage zu einer maximalen Erstreckung in Längsrichtung des jeweils zugehörigen Kontaktbereichs 45, 50 angeordnet sein. Auf den Steg 105, 110 kann auch verzichtet werden. An dem Steg 105, 110 kann ein Sensor (nicht dargestellt) oder ein Anschluss für einen Sensor angeordnet sein. Der Sensor dient zur Überwachung der jeweiligen elektrischen Energiespeicherzelle 20, 25.

Zwischen dem ersten Kontaktbereich 45 und dem zweiten Kontaktbereich 50 ist wie bereits in Fig. 1 erläutert der Kompensationsbereich 55 angeordnet. Die erste bis dritte Ebene 59, 60, 65, in der sich der Kompensationsbereich 55, der erste Kontaktbereich 45 und der zweite Kontaktbereich 50 erstrecken, sind beispielsweise identisch.

Der erste Kontaktbereich 45, der zweite Kontaktbereich 50 und der Kompensationsbereich 55 sind beispielsweise einstückig und materialeinheitlich aus einem einwandigen, mit konstanter Dicke d hergestellten Blechmaterial gefertigt. Der Kompensationsbereich 55 ist elastisch und/oder plastisch verformbar ausgebildet und weist in wenigstens in einer Raumrichtung x, y, z, eine geringere Steifigkeit als der erste Kontaktbereich 45 und/oder der zweite Kontaktbereich 50 auf.

Der Kompensationsbereich 55 ist ausgebildet, eine erste Bewegung 90 des zweiten Kontaktbereichs 50 in Längsrichtung relativ zum ersten Kontaktbereich 45 auszugleichen / zu kompensieren und einen sicheren elektrischen Kontakt des zweiten Kontaktbereichs 50 mit dem ersten Kontaktbereich 45 vorzugsweise dauerschwingungsfest sicherstellen. Die erste Bewegung 90 kann beispielsweise bei einem Aufblähen der elektrischen Energiespeicherzelle 20, 25 auftreten. Ferner kann der Kompensationsbereich 55 eine zweite Bewegung 95 in Querrichtung und/oder eine dritte Bewegung 100 in Höhenrichtung des zweiten Kontaktbereichs 50 relativ zum ersten Kontaktbereich 45 ausgleichen. Die dritte Bewegung 100 in Höhenrichtung ruft die erste Bewegung 90 in Längsrichtung als Resultierende hervor.

Durch den Bewegungsausgleich durch den Kompensationsbereich 55 wird eine Verformung, beispielsweise eine Verbiegung, des ersten Kontaktbereichs 45 und des zweiten Kontaktbereichs 50 vermieden. Dadurch wird zuverlässig ein sicherer elektrischer Kontakt zwischen dem ersten Kontaktbereich 45 und dem ersten Zellterminal 30 sowie ein sicherer zweiter elektrischer Kontakt zwischen dem zweiten Zellterminal 35 und dem zweiten Kontaktbereich 50 sichergestellt und eine mechanische Überbelastung, insbesondere beispielsweise einer Verschweißung des jeweiligen Zellterminals 30, 35 mit dem Kontaktbereich 45, 50, vermieden. Die erste bis dritte Bewegung 90, 95, 100 kann beispielsweise bei einer thermischen Ausdehnung der jeweiligen elektrischen Energiespeicherzelle 20, 25 auftreten. Auch kann eine Fertigungstoleranz und/oder eine Montagetoleranz der ersten elektrischen Energiespeicherzelle 20 und/oder der zweiten elektrischen Energiespeicherzelle 25 durch die Verformung des Kompensationsbereichs 55 ausgeglichen werden, ohne dass hierbei die Energiespeicherzelle 20, 25 mechanisch überbeansprucht wird.

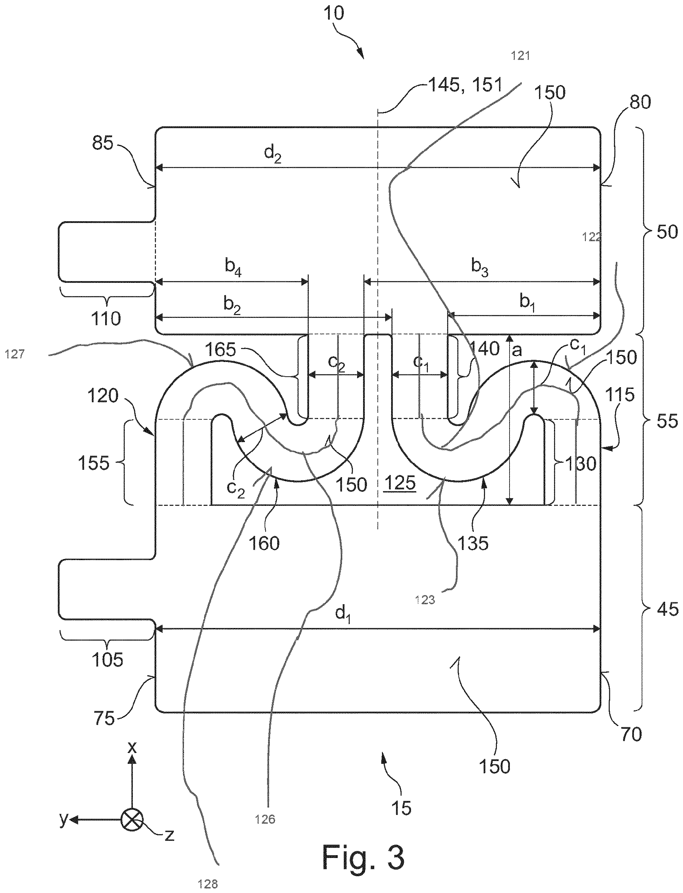

Fig. 3 zeigt eine Draufsicht auf den in den Figuren 1 und 2 gezeigten Zellverbinder 15 gemäß der ersten Ausführungsform.

Der erste Kontaktbereich 45 weist zwischen der ersten Seitenfläche 70 und der zweiten Seitenfläche 75 in y-Richtung eine erste maximale Quererstreckung d₁ auf. Ferner weist der zweite Kontaktbereich 50 zwischen der dritten Seitenfläche 80 und der vierten Seitenfläche 85 eine zweite maximale Quererstreckung d₂ auf. In der Ausführungsform ist die erste maximale Quererstreckung d₁ identisch zu der zweiten maximalen Quererstreckung d₂.

Der Kompensationsbereich 55 weist vorzugsweise wenigstens ein erstes Federelement 115 auf. Zusätzlich kann der Kompensationsbereich 55 wenigstens ein zweites Federelement 120 aufweisen. Auch ist eine andere Anzahl als in Fig. 3 gezeigter Federelemente 115, 120 möglich.

Das erste Federelement 115 ist beabstandet und in Querrichtung (y-Richtung) versetzt zu dem zweiten Federelement 120 angeordnet. Dabei begrenzen das erste Federelement 115 und das zweite Federelement 120 in Querrichtung eine Ausnehmung 125. In Längsrichtung schließt sich an die Ausnehmung 125 der erste Kontaktbereich 45 an der einen Seite und der zweite Kontaktbereich 50 an der anderen Seite an.

Beispielhaft ist das erste Federelement 115 und/oder das zweite Federelement 120 plattenförmig und sich in der ersten Ebene 59 erstreckend ausgeformt. In demontiertem Zustand ist eine Oberseite 150 und eine dritte Unterseite 58 des Kompensationsbereichs 55 (in Figur 1 dargestellt) vorzugsweise plan ausgebildet.

Insbesondere ist das erste Federelement 115 S-förmig ausgebildet. Das erste Federelement 115 erstreckt sich entlang einer ersten Bogenkurve 121. In der Draufsicht kann das erste Federelement 115 auch als mäanderförmig, insbesondere geschwungen, beschrieben werden . Dabei wird unter mäanderförmig eine geschwungene, bereichsweise bogenförmig und/oder in Windungen und nicht kreuzende Kontur des Federelements 115, 120 (bezogen auf eine Draufsicht) verstanden. Die erste Bogenkurve 121 ist stetig und kontinuierlich. Die erste Bogenkurve 121 ist frei von Ecken und/oder Sprüngen und/oder Knicken.

Das erste Federelement 115 weist eine erste Federseitenfläche 122 und eine in Querrichtung versetzt zu der ersten Federseitenfläche 122 angeordnete zweite Federseitenfläche 123 auf. Die erste und zweite Federseitenfläche 122, 123 verbinden seitlich des ersten Federelements 115 in z-Richtung die Oberseite 150 mit der dritten Unterseite 58.

Die erste Federseitenfläche 122 und die zweite Federseitenfläche 123 verlaufen parallel zueinander und beispielsweise parallel zu der ersten Bogenkurve 121. Das erste Federelement 115 kann der ersten Bogenkurve 121 derart folgen, dass die erste Bogenkurve 121 in mittiger Lage bezogen auf die Quererstreckung des ersten Federelements 115 verläuft. Durch die erste Bogenkurve 121, weist das erste Federelement 115 in der Draufsicht die geschwungene mäanderförmige Ausgestaltung auf. Ferner ist die erste Federseitenfläche 122 und vorzugsweise die zweite Federseitenfläche 123 frei von Kanten.

Insbesondere weist das zweite Federelement 120 eine gegenläufige S-Form auf. Das zweite Federelement 120 erstreckt sich entlang einer zweiten Bogenkurve 126. In der Draufsicht kann das zweite Federelement 120 auch mäanderförmig, insbesondere geschwungen, ausgestaltet sein. Die zweite Bogenkurve 126 ist stetig und kontinuierlich. Die zweite Bogenkurve 126 ist frei von Ecken und/oder Sprüngen und/oder Knicken.

Das zweite Federelement 120 weist eine dritte Federseitenfläche 127 und eine in Querrichtung versetzt zu der dritten Federseitenfläche 127 angeordnete vierte Federseitenfläche 128 auf. Die dritte und vierte Federseitenfläche 127, 128 verbinden seitlich des zweiten Federelements 120 in z-Richtung die Oberseite 150 mit der dritten Unterseite 58.

Die dritte Federseitenfläche 127 und die vierte Federseitenfläche 128 verlaufen parallel zueinander und beispielsweise parallel zu der zweiten Bogenkurve 126. Das zweite Federelement 120 kann der zweiten Bogenkurve 126 derart folgen, dass die zweite Bogenkurve 126 in mittiger Lage bezogen auf die Quererstreckung des zweiten Federelements 120 verläuft. Durch die erste Bogenkurve 126weist das zweite Federelement 120 in der Draufsicht eine geschwungene mäanderförmige Ausgestaltung auf. Ferner ist die dritte Federseitenfläche 127 und vorzugsweise die vierte Federseitenfläche 128 frei von Kanten.

Das erste Federelement 115 weist beispielsweise einen ersten Teilabschnitt 130, einen zweiten Teilabschnitt 135 und einen dritten Teilabschnitt 140 auf. Der erste Teilabschnitt 130 ist geradlinig ausgebildet und erstreckt sich im Wesentlichen in Längsrichtung. Dabei schließt sich der erste Teilabschnitt 130 in Querrichtung an die erste Seitenfläche 70 an und erstreckt sich in Richtung des zweiten Kontaktbereichs 50. Der erste Teilabschnitt 130 ist in Längsrichtung kürzer als ein minimaler Abstand a zwischen dem ersten Kontaktbereich 45 und dem zweiten Kontaktbereich 50. Auf einer dem zweiten Kontaktbereich 50 zugewandten Längsseite des ersten Teilabschnitts 130 schließt sich der zweite Teilabschnitt 135 an den ersten Teilabschnitt 130 an.

Der zweite Teilabschnitt 135 bildet den geschwungenen Bereich des ersten Federelements 115 aus und ist daher beispielhaft S-förmig ausgeformt. Dabei erstreckt sich in Längsrichtung der zweite Teilabschnitt 135 zuerst in Richtung des zweiten Kontaktbereichs 50 und ist danach in Richtung des ersten Kontaktbereichs 45 geführt, während sich am Ende des zweiten Teilabschnitts 135 der zweite Teilabschnitt 135 wieder in Richtung des zweiten Kontaktbereichs 50 erstreckt.

Der dritte Teilabschnitt 140 ist in Querrichtung von der dritten Seitenfläche 80 und der vierten Seitenfläche 85 beabstandet angeordnet. Der dritte Teilabschnitt 140 ist näher hin zu einer Mitte 145 des zweiten Kontaktbereichs 50 in Querrichtung angeordnet als zu der dritten Seitenfläche 80. Der dritte Teilabschnitt 140 erstreckt sich im Wesentlichen geradlinig parallel zu der ersten Seitenfläche 70 und dem ersten Teilabschnitt 130. Dabei ist auf der zum ersten Kontaktbereich 45 zugewandten Seite der dritte Teilabschnitt 140 mit dem zweiten Teilabschnitt 135 verbunden. Ferner ist der dritte Teilabschnitt 140 auf der zum zweiten Teilabschnitt 135 abgewandten Längsseite mit dem zweiten Kontaktbereich 50 verbunden.

Die mäanderförmige Ausgestaltung des Federelements 115, 120 hat den Vorteil, dass die erste und zweite Bewegung 90, 95 in Längsrichtung und/oder in Querrichtung besonders gut durch eine elastische und/oder plastische Verformung des Federelements 115, 120 beim Einfedern oder Ausfedern ausgeglichen werden kann und gleichzeitig sichergestellt ist, dass ein Schwingungsbruch im Bereich des Kompensationsbereichs 55 vermieden wird. Das Einfedern oder Ausfedern des Federelements 115, 120 erfolgt beispielsweise in der ersten Ebene 59 für die erste und zweite Bewegung 90, 95. Die dritte Bewegung 100 ruft zwar eine geringfügige Biegung des Kompensationsbereichs 55 hervor, jedoch erfolgt das Einfedern oder Ausfedern des Federelements 115, 120 im Wesentlichen in der ersten Ebene 59, die in diesem Fall schräg geneigt zu der zweiten Ebene 60 und/oder der dritten Ebene 65 angeordnet ist. Ein Herausbiegen beim Federn des Federelements 115, 120 aus der ersten Ebene 59, sodass das Federelement 115, 120 den Kontaktbereich 45, 50 überragt, wird durch die flache in der ersten Ebene verlaufende Ausgestaltung des Federelements 115, 120 vermieden.

Ferner ist es von Vorteil, dass der Kompensationsbereich 55 den ersten Kontaktbereich 45 und/oder den zweiten Kontaktbereich 50 überragt. Dadurch kann der elektrische Energiespeicher 10 besonders flach ausgebildet sein und der Bauraumbedarf in z-Richtung ist besonders gering.

Auch das zweite Federelement 120 erstreckt sich im Wesentlichen in der ersten Ebene 59 ebenso wie das erste Federelement 115. Das zweite Federelement 120 kann beispielsweise spiegelsymmetrisch zu einer Symmetrieebene 151, die in der Mitte 145 in Querrichtung des zweiten Kontaktbereichs 50 angeordnet ist, ausgebildet sein.

Beispielhaft weist das zweite Federelement 120 einen vierten Teilabschnitt 155, einen fünften Teilabschnitt 160 und einen sechsten Teilabschnitt 165 auf. Der vierte Teilabschnitt 155 erstreckt sich geradlinig parallel zu der ersten Seitenfläche 70. Dabei ist in Querrichtung der vierte Teilabschnitt 155 gegenüberliegend zu dem ersten Teilabschnitt 130 angeordnet. Der vierte Teilabschnitt 155 schließt sich beispielhaft in Querrichtung direkt an die zweite Seitenfläche 75 an und erstreckt sich von dem ersten Kontaktbereich 45 in Richtung des zweiten Kontaktbereichs 50 in Längsrichtung geradlinig.

Der fünfte Teilabschnitt 160 ist bildet den geschwungenen Bereich des zweiten Federelements 120 aus und weist eine gegenläufige S-Form auf und erstreckt sich von dem vierten Teilabschnitt 155 in Querrichtung in Richtung des ersten Federelements 115. Der fünfte Teilabschnitt 160 ist mit dem vierten Teilabschnitt 155 verbunden. Dabei ist der fünfte Teilabschnitt 160 in Längsrichtung zuerst in Richtung des zweiten Kontaktbereichs 50 und dann wieder in Richtung des ersten Kontaktbereichs 45 geführt, bevor der fünfte Teilabschnitt 160 wieder in Richtung des zweiten Kontaktbereichs 50 geführt ist. Dabei ist jeweils der fünfte Teilabschnitt 160 beabstandet zu dem ersten Kontaktbereich 45 und dem zweiten Kontaktbereich 50 angeordnet.

Der sechste Teilabschnitt 165 ist zwischen der dritten Seitenfläche 80 und der vierten Seitenfläche 85 an dem zweiten Kontaktbereich 50 angeordnet und erstreckt sich vom zweiten Kontaktbereich 50 in Längsrichtung in Richtung des ersten Kontaktbereichs 45 parallel zu der ersten Seitenfläche 70. Dabei ist der sechste Teilabschnitt 165 geradlinig ausgebildet und beabstandet durch die Ausnehmung 125 zu dem ersten Federelement 115, insbesondere zu dem dritten Teilabschnitt 140 angeordnet. Der erste Teilabschnitt 130, der dritte Teilabschnitt 140, der vierte Teilabschnitt 155 sowie der sechste Teilabschnitt 165 sind beispielsweise geradlinig verlaufend parallel zur x-Achse und jeweils parallel zueinander angeordnet. Dabei ist der sechste Teilabschnitt 165 näher zur Mitte 145 des zweiten Kontaktbereichs 50 angeordnet als hin zur vierten Seitenfläche 85.

Ein erster minimaler Querabstand b₁ zwischen dem dritten Teilabschnitt 140 und der dritten Seitenfläche 80 ist größer als ein zweiter minimaler Querabstand b₂ des dritten Teilabschnitts 140 zu der vierten Seitenfläche 85. Ferner ist ein dritter minimaler Querabstand b₃ des sechsten Teilabschnitts 165 zu der dritten Seitenfläche 80 größer als ein vierter minimaler Querabstand b₄ in Querrichtung zwischen dem sechsten Teilabschnitt 165 und der vierten Seitenfläche 85.

Eine erste Breite c₁ des ersten Federelements 115 ist über den Verlauf des ersten Federelements 115 im Wesentlichen konstant. Ebenso ist eine zweite Breite c₂ des zweiten Federelements 120 über den Verlauf des zweiten Federelements 120 konstant. Die zweite Breite c₂ kann beispielsweise identisch zu der ersten Breite c₁ sein. Ferner sind die erste Breite c₁ des ersten Federelements 115 und die zweite Breite c₂ des zweiten Federelements 120 deutlich geringer als die erste maximale Querstreckung d₁ und/oder die zweite maximale Quererstreckung d₂.

Fig. 4 zeigt die in Fig. 1 gezeigte Seitenansicht auf den elektrischen Energiespeicher 10.

Die zweite elektrische Energiespeicherzelle 25 weist beispielhaft in Höhenrichtung einen stark in Fig. 4 überzeichneten Versatz z₁ zu der ersten elektrischen Energiespeicherzelle 20 auf. Beispielsweise ist das zweite Zellterminal 35 in Höhenrichtung nach unten hin relativ zum ersten Zellterminal 30 und nach unten hin verglichen mit Fig. 1 versetzt angeordnet. Der Versatz z₁ in Höhenrichtung kann beispielsweise fertigungsbedingt sein (die zweite Energiespeicherzelle 25 kann in z-Richtung kürzer als die erste Energiespeicherzelle 20 sein) oder montagebedingt sein.

Der Kompensationsbereich 55 gleicht den Versatz z₁ zwischen dem ersten Zellterminal 30 und dem zweiten Zellterminal 35 in Höhenrichtung aus, ohne dass der Kompensationsbereich 55 über den ersten und/oder zweiten Kontaktbereich 45, 50 ragt. Der Ausgleich erfolgt dadurch, dass der zweite Teilabschnitt 135 und der fünfte Teilabschnitt 160 ausfedern, um die Längung des Kompensationsbereichs 55 zur Verbindung des ersten Kontaktbereichs 45 mit dem zweiten Kontaktbereich 50 herzustellen. Ferner ist der Kompensationsbereich 55 gebogen.

Abweichend zu Fig. 4 können auch das erste Zellterminal 30 und das zweite Zellterminal 35 auf gleicher Höhe angeordnet sein. In diesem Fall erfolgt ein Ausgleich der ersten und/oder zweiten Bewegung 90, 95 durch ein Einfedern und/oder Ausfedern der Federelemente 115, 120 in der ersten Ebene 65.

Durch die in den Figuren 1 bis 4 gezeigte Ausgestaltung des Zellverbinders 15 und des elektrischen Energiespeichers 10 wird im Kompensationsbereich 55 ein hoher stromtragender Querschnitt bereitgestellt, sodass der erste Kontaktbereich 45 mit dem zweiten Kontaktbereich 50 mit einem geringen elektrischen ohmschen Widerstand verbunden ist. Durch die einlagige Ausgestaltung ist insbesondere ein Übergangswiderstand zwischen Zellterminal 30, 35 und dem Zellverbinder 15 besonders gering und weitere elektrische Übergangswiderstände können vermieden werden.

Ferner ist der Kompensationsbereich 55 durch das erste und zweite Federelement 115, 120 mechanisch besonders weich ausgebildet, sodass, beispielsweise bei Temperaturschwankungen, eine Abstandsänderung zwischen dem ersten Zellterminal 30 und dem zweiten Zellterminal 35 und somit zwischen dem ersten Kontaktbereich 45 und dem zweiten Kontaktbereich 50 leicht ohne große mechanische Spannungen durch den Kompensationsbereich 55 ausgeglichen werden kann, ohne dass hierbei die Zellterminals 30, 35 mechanisch stark belastet (< 500 N) werden. Insbesondere kann eine Torsionsbelastung einer Verschweißung des Zellterminals 30, 35 mit dem Zellverbinder 15 vermieden und/oder gering gehalten werden. Die Torsionsbelastung ist insbesondere bei der achsensymmetrischen Ausgestaltung der Federelemente 115, 120 zu der Symmetrieebene 151 gering.

Durch die in den Figuren 2 und 3 gezeigte doppelmäanderartige Ausgestaltung des Kompensationsbereichs 55 ist der Zellverbinder 15 im Wesentlichen zweidimensional aus einem Blechmaterial kostengünstig und einfach herstellbar.

Die Federelemente 115, 120 gewährleisten eine Flexibilität und Beweglichkeit des ersten Kontaktbereichs 45 zu dem zweiten Kontaktbereich 50 in alle Raumrichtungen, um Bewegungen 90, 95, 100 zwischen der ersten und der zweiten elektrischen Energiespeicherzelle 20, 25 auszugleichen.

Die mäanderartige Ausgestaltung des Federelements 115, 120 hat ferner den Vorteil, dass bei Übertragung von hohen elektrischen Strömen zwischen den Zellterminals 30, 35 das erste Federelement 115 und das zweite Federelement 120 sich zwar erwärmen, jedoch aufgrund der zwischen dem ersten Federelement 115 und dem zweiten Federelement 120 angeordneten Aussparung 125 aber genügend Wärme vom Federelement 115, 120 an eine Umgebung abgegeben werden kann, um eine Überhitzung des ersten Federelements 115 und/oder des zweiten Federelements 120 zu vermeiden.

Von besonderem Vorteil ist, wenn der Zellverbinder 15, insbesondere der Kompensationsbereich 55, beispielsweise einen Aluminiumwerkstoff, wie beispielsweise AI1050 aufweist. Der besondere Vorteil des flachen Zellverbinders 15 ist weiter, dass er nicht mehr als die eigene Materialstärke benötigt und dadurch ein nur sehr flacher Bauraum notwendig ist. Dies ist bei elektrischen Energiespeichern 10 im Fahrzeugbau, insbesondere im Kraftfahrzeugbau, von besonderem Vorteil.

Auch eignet sich der Zellverbinder 15 besonders gut, um im Rahmen eines Stanzverfahrens aus einem ebenen Blechmaterial, beispielsweise einem Aluminiumblech, gestanzt zu werden. Der Zellverbinder 15, insbesondere die mäanderartige Geometrie des ersten und zweiten Federelements 115, 120 kann aber auch mittels Laserschneiden hergestellt werden. Weitere Verfahrensschritte sind zur Herstellung des Zellverbinders 15 nicht notwendig. Insbesondere kann auf ein Stauchen oder ein Biegen des Kompensationsbereichs 55 verzichtet werden, sodass die Fertigungsanlage und das Fertigungsverfahren zur Herstellung des Zellverbinders 15 besonders einfach und kostengünstig sind.

Ferner ist das Anschweißen des ersten Kontaktbereichs 45 an das erste Zellterminal 30 sowie das Anschweißen des zweiten Kontaktbereichs 50 an das zweite Zellterminal 35 durch die flache Ausgestaltung des Zellverbinders 15 besonders einfach, da ein Schweißwerkzeig besonders gut oberseitig auf den Kontaktbereich 45, 50 aufgesetzt werden kann. Insbesondere kann der Zellverbinder 15 zeitgleich am ersten Kontaktbereich 45 und dem zweiten Kontaktbereich 50 mit dem jeweiligen Zellterminal 30, 35 befestigt, insbesondere verschweißt, werden.

Die im Wesentlichen kantenfreie Ausgestaltung der Federseitenfläche 122, 123, 127, 128 hat ferner den Vorteil, dass eine Schwingungsrissbildung und/oder eine Dauerrissbildung vermieden werden kann. Dadurch kann eine hohe Stromtragfähigkeit über eine lange Lebensdauer des Zellverbinders 15 und des elektrischen Energiespeichers 10 sichergestellt werden.

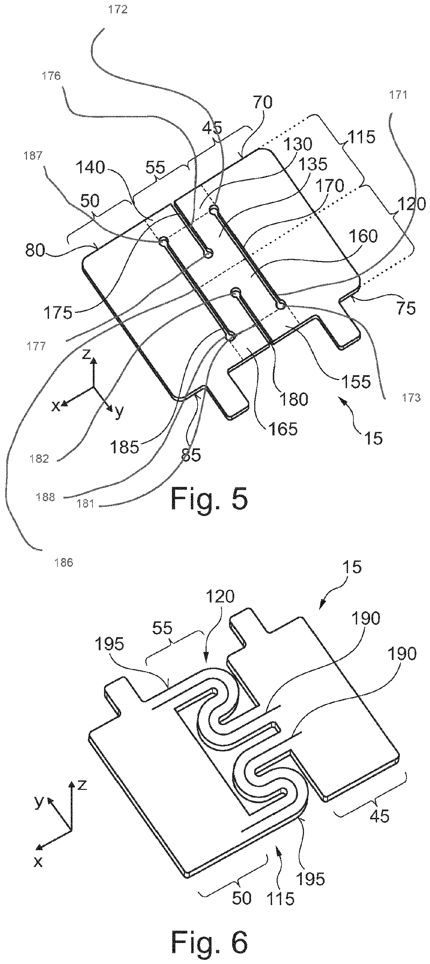

Fig. 5 zeigt eine perspektivische Darstellung eines Zellverbinders 15 gemäß einer zweiten Ausführungsform.

Der Zellverbinder 15 ist im Wesentlichen identisch zu dem in Fig. 1 erläuterten Zellverbinder 15 ausgebildet. Im Folgenden wird ausschließlich auf die Unterschiede des in Fig. 5 gezeigten Zellverbinders 15 gemäß der zweiten Ausführungsform gegenüber der in den Figuren 1 bis 4 gezeigten ersten Ausführungsform eingegangen.

Die mäanderförmige Ausgestaltung des ersten Federelements 115 und des zweiten Federelements 120 wird mittels mehrerer parallel in Querrichtung verlaufender Schlitze 170, 175, 180, 185 erzielt. Dabei schließt sich stirnseitig in Längsrichtung ein erster Schlitz 170 an den ersten Kontaktbereich 45 an. Der erste Schlitz 170 ist länglich ausgebildet und verläuft parallel zur y-Achse. Der erste Schlitz 170 ist durchgängig zwischen der Oberseite 150 und der ersten Unterseite 56.

Der erste Schlitz 170 weist einen ersten Schlitzabschnitt 171, eine erste Verbreiterung 172 und vorzugsweise eine zweite Verbreiterung 172 auf. Die erste Verbreiterung 172 und die zweite Verbreiterung 173 sind in Querrichtung gegenüberliegend an jeweils einem Ende des ersten Schlitzabschnitts 171 angeordnet. Der erste Schlitzabschnitt 171 weist in Längsrichtung eine konstante Breite auf. Die erste Verbreiterung 172 und/oder die zweite Verbreiterung 173 kann oval und/oder kreisförmig in der Draufsicht ausgebildet sein und ist in Längsrichtung breiter ausgebildet als der erste Schlitzabschnitt 171.

In Querrichtung ist zwischen einem Ende des ersten Schlitzes 170 und der ersten Seitenfläche 70 der erste Teilabschnitt 130 angeordnet. Zwischen dem ersten Schlitz 170 und der zweiten Seitenfläche 75 ist der vierte Teilabschnitt 155 angeordnet. Der erste Schlitz 170 endet somit beabstandet zu der ersten Seitenfläche 70 und der zweiten Seitenfläche 75.

In Längsrichtung sind hin zu dem zweiten Kontaktbereich 50 ein zweiter Schlitz 175 und ein dritter Schlitz 180 versetzt zu dem ersten Schlitz 170 angeordnet. Der zweite Schlitz 175 und der dritte Schlitz 180 erstrecken sich von außen nach innen hin und enden beabstandet zueinander.

Der zweite Schlitz 175 weist einen zweiten Schlitzabschnitt 176 und eine dritte Verbreiterung 177 auf. Der dritte Schlitz 180 weist einen dritten Schlitzabschnitt 181 und eine vierte Verbreiterung 182 auf.

Die dritte Verbreiterung 177 kann oval und/oder kreisförmig in der Draufsicht ausgebildet sein und ist in Längsrichtung breiter ausgebildet als der zweite Schlitzabschnitt 176. Der zweite Schlitzabschnitt 176 weist in Längsrichtung die gleiche Erstreckung beispielsweise auf wie der erste Schlitzabschnitt 171.

Dabei schließt sich der zweite Schlitzabschnitt 176 in Querrichtung an die in Längsrichtung weitergeführte erste Seitenfläche 70 an und erstreckt sich parallel zur y-Achse in Richtung des dritten Schlitzes 180, sodass der zweite Schlitzabschnitt 176 beispielhaft senkrecht zu der ersten Seitenfläche 70 ausgerichtet ist. Am Querende gegenüberliegend zu der ersten Seitenfläche 70 ist die dritte Verbreiterung 177 angeordnet.

Der dritte Schlitz 180 ist in einer gemeinsamen yz-Ebene mit dem zweiten Schlitz 175 angeordnet. Dabei erstreckt sich der dritte Schlitzabschnitt 181 von außen in Richtung des zweiten Schlitzes 175, vorzugsweise senkrecht zu der zweiten Seitenfläche 75. Dabei kann der dritte Schlitzabschnitt 181 an der in Längsrichtung fortgeführten zweiten Seitenfläche 75 beginnen. Innenseitig beabstandet zu dem zweiten Schlitz 175 endet der dritte Schlitz 180, wobei am Ende des dritten Schlitzabschnitts 181 die vierte Verbreiterung 182 angeordnet ist. Der zweite Schlitz 175 und der dritte Schlitz 180 sind beispielhaft in Querrichtung schlanker und kürzer ausgebildet als der erste Schlitz 170.

In Längsrichtung gegenüberliegend zu dem ersten Schlitz 170 ist der vierte Schlitz 185 angeordnet. Der vierte Schlitz 185 schließt sich an den zweiten Kontaktbereich 50 in Längsrichtung auf der zum ersten Kontaktbereich 45 zugewandten Seite an und erstreckt sich in seiner Haupterstreckungsrichtung in Querrichtung. Dabei können der erste Schlitz 170 und der vierte Schlitz 185 in Querrichtung gleich lang ausgebildet sein und auf gleicher Höhe in Querrichtung jeweils positioniert sein. Der vierte Schlitz 185 ist beispielsweise in Querrichtung zwischen dem dritten Teilabschnitt 140 und dem sechsten Teilabschnitt 165 angeordnet.

Der vierte Schlitz 185 weist einen vierten Schlitzabschnitt 186, eine fünfte Verbreiterung 187 und vorzugsweise eine sechste Verbreiterung 188 auf. Die fünfte Verbreiterung 187 und die sechste Verbreiterung 188 sind in Querrichtung gegenüberliegend an jeweils einem Ende des vierten Schlitzabschnitts 186 angeordnet. Der vierte Schlitzabschnitt 186 weist in Längsrichtung eine konstante Breite auf. Die fünfte Verbreiterung 187 und/oder die sechste Verbreitung 188 kann oval und/oder kreisförmig in der Draufsicht ausgebildet sein und ist in Längsrichtung breiter ausgebildet als der vierte Schlitzabschnitt 186.

Die erste Verbreiterung 172 und die fünfte Verbreiterung 187 können den gleichen Abstand zur ersten Seitenfläche 70 aufweisen. Die zweite Verbreiterung 173 und die sechste Verbreiterung 188 können den gleichen Abstand zur zweiten Seitenfläche 75 aufweisen. Die Schlitzabschnitte 171, 176, 181, 186 weisen in Längsrichtung beispielsweise die gleiche Breite auf. Der erste Schlitzabschnitt 171 und der vierte Schlitzabschnitt 186 verlaufen parallel zueinander in Querrichtung senkrecht zur ersten Seitenfläche 70.

Die erste bis sechste Verbreiterung 172, 173, 177, 182, 187, 188 sind in der Ausführungsform beispielhaft identisch zueinander ausgebildet. Beispielhaft können die erste bis sechste Verbreitung 172, 173, 177, 182, 187, 188 in Längsrichtung wenigstens 1,5 bis 3 mal so breit ausgebildet sein wie der jeweilig zugeordnete Schlitzabschnitt 171, 176, 181, 186.

Abweichend von den Figuren 1 bis 4 schließt sich der dritte Teilabschnitt 140 an die dritte Seitenfläche 80 am zweiten Kontaktbereich 50 an. Ferner schließt sich der sechste Teilabschnitt 165 abweichend von den Figuren 1 bis 4 an die vierte Seitenfläche 85 in Querrichtung an. Dabei kann die dritte Seitenfläche 80 sich auch entlang des dritten Teilabschnitts 140 bis hin zum zweiten Schlitz 175 in Längsrichtung erstrecken. Ebenso kann die vierte Seitenfläche 85 sich in Längsrichtung über den sechsten Teilabschnitt 165 bis hin zum dritten Schlitz 180 erstrecken. Der zweite Teilabschnitt 135 ist durch den zweiten Schlitz 175 U-förmig ausgeformt. Ebenso ist der fünfte Teilabschnitt 160 durch den dritten Schlitz 180 U-förmig ausgebildet.

Die Anordnung der Schlitze 170, 175, 180, 185 hat den Vorteil, dass das erste Federelement 115 und das zweite Federelement 120 auf einfache Weise mäanderförmig geschwungen hergestellt werden können. Durch die Verbreiterung 172, 173, 177, 182, 187, 188 ist vorzugsweise sichergestellt, dass die Federseitenfläche 122, 123, 127, 128 vorzugsweise stetig und kantenfrei ausgebildet ist. Ferner hat die in Fig. 5 gezeigte Ausgestaltung gegenüber den Figuren 1 bis 4 den Vorteil, dass der Kompensationsbereich 55 steifer gegenüber dem in den Figuren 1 bis 4 gezeigten Kompensationsbereich 55 ausgebildet ist.

Fig. 6 zeigt eine perspektivische Darstellung eines Zellverbinders 15 gemäß einer dritten Ausführungsform.

Der Zellverbinder 15 ist im Wesentlichen identisch zu dem in den Figuren 1 bis 4 gezeigten Zellverbinder 15 ausgebildet. Im Folgenden wird ausschließlich auf die Unterschiede des in Fig. 6 gezeigten Zellverbinders 15 gegenüber dem in den Figuren 1 bis 4 gezeigten Zellverbinder 15 eingegangen.

Jedes der Federelemente 115, 120 weist jeweils eine spaltförmig ausgebildete Durchgangsöffnung 190 auf. Die Durchgangsöffnung 190 erstreckt sich bis jeweils in den ersten und/oder zweiten Kontaktbereich 45, 50 in Längsrichtung. Die Durchgangsöffnung 190 im ersten Federelement 115 folgt einer Außenkontur 195 des ersten Federelements 115. Dabei kann die Durchgangsöffnung 190 in mittiger Lage in dem ersten Federelement 115 verlaufend angeordnet sein. In analoger Weise ist ebenso die in dem zweiten Federelement 120 vorgesehene Durchgangsöffnung 190 verlaufend ausgebildet, sodass auch die Durchgangsöffnung 190 im zweiten Federelement 120 der Außenkontur 195 des zweiten Federelements 120 folgt.

Durch die Durchgangsöffnung 190 ist das erste Federelement 115 und das zweite Federelement 120 jeweils gegenüber der in den Figuren 1 bis 4 gezeigten Ausgestaltung geschwächt, sodass der Kompensationsbereich 55 besonders weich ausgebildet ist. Die Durchgangsöffnung 190 kann beispielsweise mittels eines Laserschneidverfahrens jeweils in das Federelement 115, 120 eingebracht werden.

Die in Fig. 6 gezeigte Ausgestaltung eignet sich insbesondere, wenn die Zellterminals 30, 35 nur gering mechanisch belastet werden dürfen.

Durch die flexible Ausgestaltung des Kompensationsbereichs 55 des in den Figuren 1 bis 6 gezeigten Zellverbinders 15, insbesondere die mäanderartige Ausgestaltung des ersten und/oder zweiten Federelements 115, 120, wird ein Zellverbinder 15, insbesondere eine Sammelschiene 40 realisiert, bei welcher eine hohe mechanische Stabilität (mehr als 60000 dynamische Belastungen) mit beispielsweise einer Amplitude von 0,3 mm und - 0,1 mm mit einem Z-Versatz von beispielsweise 0,7 mm bis 1,5 mm ausgeglichen werden.

### Bezugszeichenliste

- 10: elektrischer Energiespeicher
- 15: Zellverbinder
- 20: erste elektrische Energiespeicherzelle
- 25: zweite elektrische Energiespeicherzelle
- 30: erstes Zellterminal
- 35: zweites Zellterminal
- 40: Sammelschiene
- 45: erster Kontaktbereich
- 50: zweiter Kontaktbereich
- 55: Kompensationsbereich
- 56: erste Unterseite
- 57: zweite Unterseite
- 58: dritte Unterseite
- 59: erste Ebene
- 60: zweite Ebene
- 65: dritte Ebene
- 70: erste Seitenfläche
- 75: zweite Seitenfläche
- 80: dritte Seitenfläche
- 85: vierte Seitenfläche
- 90: erste Bewegung
- 95: zweite Bewegung
- 100: dritte Bewegung
- 105: erster Steg
- 110: zweiter Steg
- 115: erstes Federelement
- 120: zweites Federelement
- 121: erste Bogenkurve
- 122: erste Federseitenfläche
- 123: zweite Federseitenfläche
- 125: Aussparung
- 126: zweite Bogenkurve
- 127: dritte Federseitenfläche
- 128: vierte Federseitenfläche
- 130: erster Teilabschnitt
- 135: zweiter Teilabschnitt
- 140: dritter Teilabschnitt
- 145: Mitte
- 150: Oberseite
- 151: Symmetrieebene
- 155: vierter Teilabschnitt
- 160: fünfter Teilabschnitt
- 165: sechster Teilabschnitt
- 170: erster Schlitz
- 171: erster Schlitzabschnitt
- 172: erste Verbreiterung
- 173: zweite Verbreiterung
- 175: zweiter Schlitz
- 176: zweiter Schlitzabschnitt
- 177: dritte Verbreiterung
- 180: dritter Schlitz
- 181: dritter Schlitzabschnitt
- 182: vierte Verbreiterung
- 185: vierter Schlitz
- 186: vierter Schlitzabschnitt
- 187: fünfte Verbreiterung
- 188: sechste Verbreiterung
- 190: Durchgangsöffnung
- 195: Außenkontur

- a: minimaler Abstand zwischen erstem Kontaktbereich und zweiten Kontaktbereich
- b₁: erster minimaler Querabstand
- b₂: zweiter minimaler Querabstand
- b₃: dritter minimaler Querabstand
- b₄: vierter minimaler Querabstand
- c₁: erste Breite des ersten Federelements
- c₂: zweite Breite des zweiten Federelements
- d₁: erste maximale Quererstreckung des ersten Kontaktbereichs
- d₂: zweite maximale Quererstreckung des zweiten Kontaktbereichs
- d: Dicke des Zellverbinders
- z₁: Versatz

## Patentansprüche

1. Zellverbinder (15)
- zum elektrisch leitfähigen Verbinden eines ersten Zellterminals (30) einer ersten elektrischen Energiespeicherzelle (20) eines elektrischen Energiespeichers (10) und eines zweiten Zellterminals (35) einer zweiten elektrischen Energiespeicherzelle (25) des elektrischen Energiespeichers (10),
- wobei der Zellverbinder (15) einen ersten Kontaktbereich (45), einen zweiten Kontaktbereich (50) und einen zwischen dem ersten Kontaktbereich (45) und dem zweiten Kontaktbereich (50) angeordneten Kompensationsbereich (55) aufweist,
- wobei der Kompensationsbereich (55) den ersten Kontaktbereich (45) mit dem zweiten Kontaktbereich (50) verbindet und ausgebildet ist, eine Bewegung des ersten Kontaktbereichs (45) relativ zu dem zweiten Kontaktbereich (50) zu ermöglichen,
- wobei der Kompensationsbereich (55) wenigstens ein erstes Federelement (115) aufweist,
- wobei das erste Federelement (115) zumindest abschnittsweise mäanderförmig ausgeformt ist und sich plattenförmig in einer ersten Ebene (59) erstreckt,
- wobei das erste Federelement (115) ausgebildet ist, bei einer Bewegung des ersten Kontaktbereichs (45) relativ zu dem zweiten Kontaktbereich (50) in der ersten Ebene (59) zu federn.

2. Zellverbinder (15) nach Anspruch 1,
- wobei der Kompensationsbereich (55) ein zweites Federelement (120) aufweist,
- wobei das zweite Federelement (120) in einer ersten Richtung (y) versetzt zu dem ersten Federelement (115) angeordnet ist,
- wobei das zweite Federelement (120) zumindest abschnittsweise mäanderförmig und plattenförmig ausgeformt ist und sich, vorzugsweise im Wesentlichen vollständig, in der ersten Ebene (59) erstreckt.

3. Zellverbinder (15) nach einem der vorhergehenden Ansprüche,
- wobei das erste Federelement (115) wenigstens einen ersten Teilabschnitt (130) und einen zweiten Teilabschnitt (135) aufweist,
- wobei der erste Teilabschnitt (130) an einer Seite mit dem ersten Kontaktbereich (45) verbunden ist und sich geradlinig in einer zweiten Richtung (x) zu dem zweiten Kontaktbereich (50) hin erstreckt,
- wobei der zweite Teilabschnitt (135) auf einer dem ersten Kontaktbereich (45) abgewandten Seite des ersten Teilabschnitts (130) sich an den ersten Teilabschnitt (130) anschließt,
- wobei der zweite Teilabschnitt (130) S-förmig ausgebildet ist.

4. Zellverbinder (15) nach Anspruch 3,
- wobei das erste Federelement (115) einen dritten Teilabschnitt (140) aufweist,
- wobei der zweite Teilabschnitt (135) auf einer dem ersten Teilabschnitt (130) abgewandten Seite mit dem dritten Teilabschnitt (140) verbunden ist,
- wobei der dritte Teilabschnitt (140) sich geradlinig in der zweiten Richtung erstreckt,
- wobei der dritte Teilabschnitt (140) in der ersten Richtung (y) versetzt zu dem ersten Teilabschnitt (130) angeordnet ist und mit dem zweiten Kontaktbereich (50) verbunden ist.

5. Zellverbinder (15) nach einem der Ansprüche 2 bis 4,
- wobei das zweite Federelement (120) gegenläufig zu dem ersten Federelement (115) verlaufend ausgeformt ist,
- oder
- wobei das zweite Federelement (120) identisch zu dem ersten Federelement (115) verlaufend ausgeformt ist.

6. Zellverbinder (15) nach einem der vorhergehenden Ansprüche,
- wobei der erste Kontaktbereich (45) eine erste Seitenfläche (70) und eine in der ersten Richtung (y) gegenüberliegend zu der ersten Seitenfläche (70) angeordnete zweite Seitenfläche (75) aufweist,
- wobei der erste Kontaktbereich (45) zwischen der ersten Seitenfläche (70) und der zweiten Seitenfläche (75) eine erste maximale Quererstreckung (d₁) aufweist,
- wobei eine erste maximale Breite (c₁) des ersten Federelements (115) geringer ist als die erste maximale Quererstreckung (d₁).

7. Zellverbinder (15) nach Anspruch 6,
- wobei sich das erste Federelement (115) in der ersten Richtung (y) an die erste Seitenfläche (70) des ersten Kontaktbereichs (45) anschließt.

8. Zellverbinder (15) nach Anspruch 6 oder 7,
- wobei der zweite Kontaktbereich (50) eine dritte Seitenfläche (80) und eine in der ersten Richtung gegenüberliegend zur dritten Seitenfläche (80) angeordnete vierte Seitenfläche (85) aufweist,
- wobei die dritte Seitenfläche (80) auf einer der ersten Seitenfläche (70) zugewandten Seite und die vierte Seitenfläche (85) auf einer der zweiten Seitenfläche (75) zugewandten Seite des zweiten Kontaktbereichs (50) angeordnet ist,
- wobei das erste Federelement (115) mit dem zweiten Kontaktbereich (50) beabstandet zu der dritten Seitenfläche (80) und zu der vierten Seitenfläche (85) verbunden ist.

9. Zellverbinder (15) nach Anspruch 8 und Anspruch 2,
- wobei das zweite Federelement (120) mit dem ersten Kontaktbereich (45) anschließend an die zweite Seitenfläche (75) verbunden ist,
- wobei das zweite Federelement (120) mit dem zweiten Kontaktbereich (50) beabstandet zu der dritten Seitenfläche (80) und der vierten Seitenfläche (85) verbunden ist.

10. Zellverbinder (15) nach einem der vorhergehenden Ansprüche,
- wobei in dem ersten Federelement (115) eine Durchgangsöffnung (190) angeordnet ist,
- wobei die Durchgangsöffnung (190) einem Verlauf einer Außenkontur (195) des ersten Federelements (115) folgt.

11. Zellverbinder (15) nach einem der vorhergehenden Ansprüche,
- wobei der Kompensationsbereich (55) wenigstens einen länglich geradlinig verlaufenden ausgebildeten ersten Schlitz (170) aufweist,
- wobei der erste Schlitz (170) zwischen dem ersten Federelement (115) und dem ersten Kontaktbereich (45) angeordnet ist.

12. Zellverbinder (15) nach einem der vorhergehenden Ansprüche,
- wobei der erste Kontaktbereich (45) und der zweite Kontaktbereich (50) plattenförmig ausgebildet sind und sich in der ersten Ebene (59) erstrecken.

13. Zellverbinder (15) nach einem der vorhergehenden Ansprüche,
- wobei das erste Federelement (115) eine erste Federseitenfläche (122) aufweist,
- wobei die erste Federseitenfläche (122), vorzugsweise über ihre gesamte Erstreckung, stetig verlaufend ausgebildet ist,
- und/oder
- wobei die erste Federseitenfläche (122), vorzugsweise über ihre gesamte Erstreckung, kantenfrei ausgebildet ist.

14. Elektrischer Energiespeicher (10), insbesondere Traktionsbatterie, für ein Fahrzeug, insbesondere ein Kraftfahrzeug,
- aufweisend einen Zellverbinder (15), eine erste elektrische Energiespeicherzelle (20) und eine zweite elektrische Energiespeicherzelle (25),
- wobei der Zellverbinder (15) nach einem der vorhergehenden Ansprüche ausgebildet ist,
- wobei die erste elektrische Energiespeicherzelle (20) ein erstes Zellterminal (30) und die zweite elektrische Energiespeicherzelle (25) eines zweites Zellterminal (35) aufweist,
- wobei der erste Kontaktbereich (45) mit dem ersten Zellterminal (30) und der zweite Kontaktbereich (50) mit dem zweiten Zellterminal (35) elektrisch und mechanisch verbunden sind.
